# EUROPEAN PATENT APPLICATION

(11) **EP 2 716 525 A1**
(43) Date of publication of application: **09.04.2014**
(21) Application number: 11866340.0
(22) Date of filing: 26.05.2011
(51) Int. Cl.: B62D 25/06, B21D 22/20, B21D 22/26, C21D 1/18, C21D 1/40, C21D 9/00

(54) **METHOD OF FORMING HEADER EXTENSION, AND VEHICLE STRUCTURE**

(71) Applicant: TOYOTA JIDOSHA KABUSHIKI KAISHA, Toyota-shi, Aichi-ken, 471-8571 (JP)
(72) Inventor: SATO, Hiroshi, Toyota-shi, Aichi-ken 471-8571 (JP)
(74) Representative: Kuhnen & Wacker
(86) International application number: PCT/JP2011/062116
(87) International publication number: WO 2012/160697

(57) **Abstract**

A method of forming a header extension coupling a front header and a roof side inner includes: electrically heating a part of a material to a temperature of not less than a hardening temperature such that a front header side is heated to the temperature of not less than the hardening temperature and a roof side inner side is heated to a temperature of less than the hardening temperature; and press-forming the material after the electrical heating into the shape of the header extension; and hardening the material by quenching. In this way, a vehicle structure can be provided such that the bending mode under application of a load to the roof can be appropriately controlled, and productivity can be improved.

## Description

### Technical Field

The present invention relates to a technique of forming a header extension for bonding a front header and a roof side inner, and to a vehicle structure including the front header, the roof side inner and the header extension.

### Background Art

JP 2004-322722 A discloses that a header extension for connecting a front header and a roof side inner, wherein the header extension has weaker strength in the vicinity of the front header than in the vicinity of the roof side inner so that the connection breaks from the side of the roof side inner. Due to the structure, when the load is applied to the roof, the stress on the header extension is released to the connection section near the roof side inner. As the result of that, the roof side inner can be prevented from bending deformation, and the front windshield can avoid the break.

However, in the technique of JP 2004-322722 A, it is troublesome that the connection strength with the roof side inner is made weaker than the connection strength with the front header, and therefore the operation difficulty may be increased.

### Citation List

### Patent Literature

PTL 1: JP 2004-322722 A

### Summary of Invention

### Technical Problem

The present invention aims to provide a technique of controlling a bending mode of a roof when a load is applied to the roof, and a vehicle structure with improved productivity.

### Technical Solutions

First aspect of the present invention is a method of forming a header extension connecting a front header and a roof side inner, and the method includes electrically heating a part of a material to a temperature of not lower than a hardening temperature thereof such that a front header side is heated to the temperature of not lower than the hardening temperature and a roof side inner side is heated to a temperature lower than the hardening temperature; and press-forming the material after the electrical heating into a shape of the header extension and hardening the material by quenching.

In the preferable embodiment, the header extension is extended from one end to which the front header is ended to the other end to which the roof side inner is bonded, and comprises a flange having a face perpendicular to the extended direction of the header extension so as to be bonded with the roof side inner by face bonding, the material comprises a shape in which an area at the roof side inner side has a wider width across the extended direction of the header extension than the other area, and an area at the front header side has a narrower width across the extended direction of the header extension than the other area, and the electrical heating is performed along the extended direction of the header extension.

Second aspect of the present invention is a vehicle structure including a front header; a roof side inner; and a header extension connecting the front header and the roof side inner, wherein in the header extension, a front header side is a hardened section, and a roof side inner side is an unhardened section.

### Advantageous Effects of Invention

According to the invention, when the load is applied to the roof, the bending mode can be appropriately controlled, and the vehicle structure with high productivity can be provided.

### Brief Description of Drawings

FIG. 1 illustrates a vehicle structure including a front header, a roof side inner and a header extension connecting the front header and the roof side inner.
FIG. 2 is a perspective view showing the front header, the roof side inner and the header extension.
FIG. 3 illustrates a current distribution in a material of the header extension.
FIG. 4 shows a strength distribution of the material of the header extension after a press forming.
FIG. 5 shows a result of strength test for a roof of the vehicle structure including the front header, the roof side inner and the header extension according to the present embodiment.

### Description of Embodiments

### [Vehicle Structure]

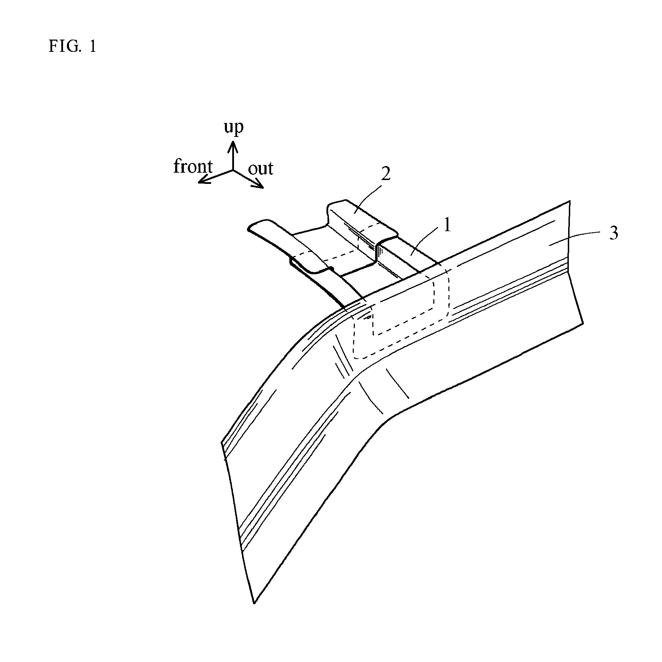

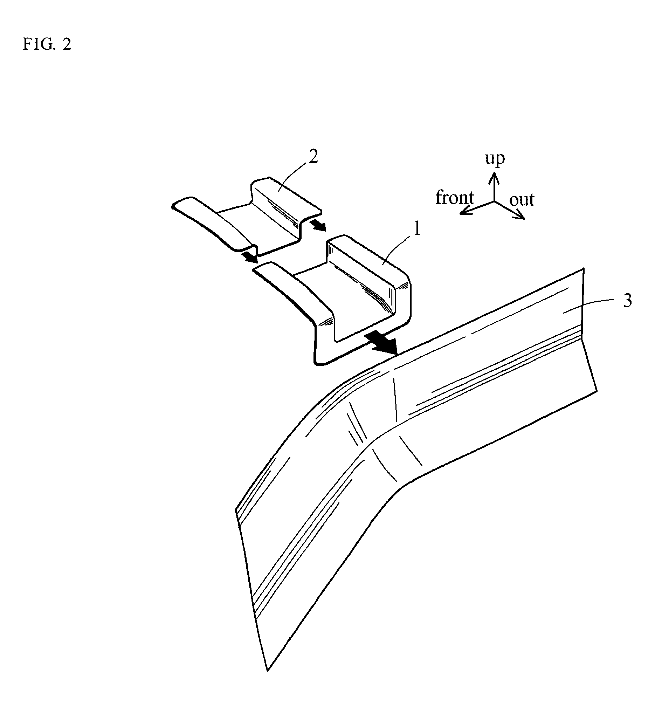

As illustrated in FIGS. 1 and 2, a vehicle structure in the present embodiment includes a header extension 1, and a front header 2 and a roof side inner 3 which are connected via the header extension 1.

### [Header Extension]

The header extension 1 is a connector for the front header 2 that is disposed in the upper of the front portion of the vehicle and the roof side inner 3 that is disposed in the outer side of the vehicle.

As shown in FIG. 2, the header extension 1 has a hat-shaped section, and the outer end is formed in a flange shape so as to be bonded to the roof side inner 3 by face bonding. In other words, the header extension 1 has a bonding flange at the outer end, which has the same plane as the side of the roof side inner 3.

The header extension 1 having such structure is bonded to the front header 2 at the inner end and to the roof side inner 3 at the outer end.

The front header 2 is extended along a width direction of the vehicle, and at both ends, the front header is connected to the roof side inners 3 via the header extensions 1. The front header 2 supports the upper of a front windshield and the front of the roof panel.

The roof side inner 3 is extended along a longitudinal direction of the vehicle, and is arranged in the side of the front header 2. The roof side inner 3 supports the side of the front windshield.

The header extension 1 is formed by a hot-pressing forming in which a part of the material is heated to a hardening temperature and after that the material is press-formed and hardened by quenching.

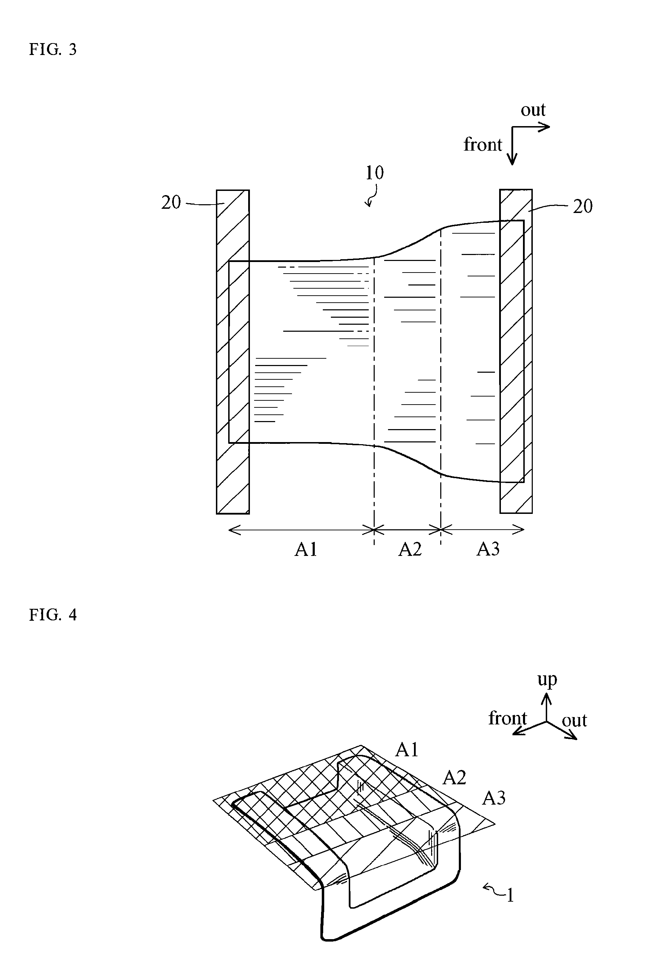

More specifically, as shown in FIGS. 3 and 4, a plate material 10 is attached with a pair of electrodes 20, and electricity is passed between the electrodes 20, whereby the material 10 is heated. The material 10 which is heated to a predetermined temperature is set in a die and pressed therein, whereby the material is hardened by quenching and formed in accordance with a forming surface of the die. Thus, the hot-pressing forming is performed on the material 10, and the material is formed into the shape of the header extension 1.

### [Shape of Material]

As depicted in FIG. 3, the material 10 is a plate having a trapezoid shape in which the width (width along the longitudinal direction) in the outer portion is larger than that in the inner portion. As described above, the header extension 1 has the flange in the outer end, so that the width of the outer portion is larger than the width of the inner portion which will be simply formed into the hat shape. In other words, considering that the header extension 1 is bonded to the roof side inner 3 by face bonding, the material 10 has the larger width in the outer side so as to secure the rigidity of the flange.

The material 10 has three sections from the inner side to the outer side: a narrow section A1, a middle section A2, and a wide section A3. The narrow section A1 is a rectangular section located in the inner side of the vehicle structure. The wide section A3 is located in the outer side of the vehicle, and is a rectangular section including a portion corresponding to the flange of the header extension 1. The middle section A2 is located between the narrow section A1 and the wide section A3.

When passing electricity through the material 10, the electrodes 20 are connected to the inner end and the outer end of the material 10. The material 10 is set and press-formed such that electricity passes from the inner end to the outer end so that the passing direction is the same as a direction of the vehicle structure. As described above, the current conduction direction is the same as the width direction of the vehicle structure.

Electricity passes across the narrow section A1, middle section A2 and wide section A3. The narrow section A1 has smaller section area than the other sections A2 and A3, so that the electric resistance in the narrow section is larger than the other sections, whereby the heating amount in that section is higher and temperature in that section becomes higher. As the same, the heating amount in the wide section A3 is smaller, and temperature in the wide section becomes lower.

When the temperature in the narrow section A1 becomes over the transformation temperature, the electrical heating is stopped. In the material 10, the heating amount in the narrow section A1 is the largest, and therefore the temperature in the narrow section rises the fastest in the sections. So, in the other sections A2 and A3, the electric heating finishes with lower temperature than the transformation temperature of the material 10.

When the pressing is performed on the material 10 which is heated by such electric heating, the narrow section A1 becomes a hardened section and the wide section A3 becomes an unhardened section, i.e., a warm forming section. The middle section A2 which is located between these sections becomes a transition section from the hardened section to the unhardened section.

As the result, the strength of the sections of the material 10 after the hot-pressing forming satisfies the following inequality: the narrow section A1 > the middle section A2 > the wide section A3, and thus the strength distribution occurs along the width direction of the vehicle.

As described above, the shape of the material 10 is formed in the trapezoid where the outer width is narrow and the inner width is wide corresponding to the shape of the header extension 1, and the electricity passes along the width direction of the vehicle, and therefore, the material 10 after the electric heating has the temperature distribution. Due to the temperature distribution, during the press-forming to the material 10, there exist the hardened section (the narrow section A1) in which the material is cooled rapidly from the predetermined temperature, the warm forming section (the wide section A3) in which the material is formed under high temperature, and the middle section A2 containing the both sections (see FIG. 4).

After the hot-pressing, in the narrow section A1 as the hardened section, the strength of the material 10 is enlarged. On the other hand, in the wide section A3 as the unhardened section, the strength of the material 10 does not change. As the result of that, in the header extension 1, the strength in the inner portion (in the side of the front header 2) becomes large, and the strength in the outer portion (in the side of the roof side inner 3) becomes small, and thus the strength distribution occurs along the width direction of the vehicle.

Further, there is the middle section A2 among the narrow section A1 and the wide section A3. In the middle section A2, the portion at the side of the narrow section A1 has large strength and the portion at the side of the wide section A3 has small strength, namely, the strength gradually becomes small from the narrow section A1 to the wide section A3.

### [Strength Test for Roof]

The header extension 1 having the hardened section at the side of the front header 2 and the unhardened section at the side of the roof side inner 3, and the vehicle including the front header 2 and the roof side inner 3 connected by the header extension 1 are prepared.

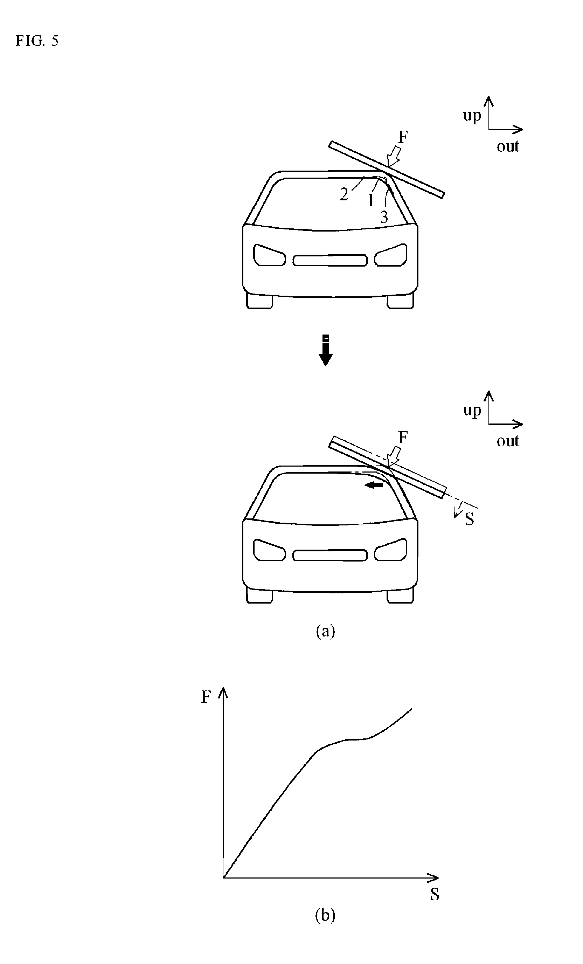

For the vehicle, as shown in FIG. 5(a), to the outer end of the roof, a force F is applied in a direction inclined to the vertical direction, and the strength test is operated for inspecting the magnitude of the force F. Concretely, as shown in FIG. 5(b), a device is pressed with the force F, and a correlation between a shifting amount S and the force F is obtained.

As shown in FIG. 5(b), when the force F becomes larger than a certain value, the header extension 1 deforms from the low-strength side (outer side), and then the rise of the force F temporarily stops, after that the force rises again. Thus, in the header extension 1, the portion at the side of the roof side inner 3 deforms before, so that the front header 2 is prevented from bending.

Here, the bending mode of the header extension 1 is a deformation mode in which the header extension gradually deforms from the outer side to the inner side according to the strength distribution of the header extension 1. In short, the deformation point is led to the connection area with the roof side inner 3.

Thus, the bending mode of the header extension 1 where the force F is applied to the roof can be controlled.

To the wide section A3 of the material 10, the press-forming is performed under heated condition, so that the formability and the forming accuracy can be improved.

The wide section A3 is corresponding to the flange of the header extension 1, in which the forming amount is large and the forming accuracy is necessary. In the present embodiment, the forming is performed in accordance with the shape of the material 10 and with the usage of the header extension 1. Especially, effective rigidity can be secured in the flange of the header extension 1 that needs large section area across the extending direction thereof.

The material 10 is formed in a shape having a wide portion corresponding to the portion of the header extension 1 which is located in the connection side to the roof side inner 3.

In the embodiment, using the material 10 having the shape according to the header extension 1, the hot-pressing forming is performed. Accordingly, after the electric heating, the narrow section A1 becomes the hardened section, the wide section A3 becomes the unhardened section, and the wide section A3 is corresponding to the flange of the header extension 1 of which the expanded length is long, so that the material 10 has the best shape to the header extension 1.

As described above, when the electric heating is performed on the material 10, there is no need to employ a special method of providing the desired temperature distribution, thereby reducing equipment cost. Moreover, after pressing the material 10, there is no need to cut a large area in a subsequent trimming process, thereby enhancing yield rate.

Furthermore, when manufacturing the vehicle structure including the header extension 1m the front header 2 and the roof side inner 3, the bonding between the header extension 1 and the front header 2 and between the header extension 1 and the roof side inner 3 can be achieved by a simple operation such as a general welding, and therefore the productivity is improved.

### Industrial Applicability

The present invention related to a header extension for connecting a front header and a roof side inner, and a vehicle structure including the header extension connecting the front header with the roof side inner 3.

### Explanation of Numerals

1: header extension, 2: front header, 3: roof side inner, 10: material, 20: electrode

## Claims

1. A method of forming a header extension connecting a front header and a roof side inner comprising:
electrically heating a part of a material to a temperature of not lower than a hardening temperature thereof such that a front header side is heated to the temperature of not lower than the hardening temperature and a roof side inner side is heated to a temperature lower than the hardening temperature; and
press-forming the material after the electrical heating into a shape of the header extension and hardening the material by quenching.

2. The method according to claim 1, wherein
the header extension is extended from one end to which the front header is ended to the other end to which the roof side inner is bonded, and comprises a flange having a face perpendicular to the extended direction of the header extension so as to be bonded with the roof side inner by face bonding,
the material comprises a shape in which an area at the roof side inner side has a wider width across the extended direction of the header extension than the other area, and an area at the front header side has a narrower width across the extended direction of the header extension than the other area, and
the electrical heating is performed along the extended direction of the header extension.

3. A vehicle structure comprising:
a front header;
a roof side inner; and
a header extension connecting the front header and the roof side inner,
wherein in the header extension, a front header side is a hardened section, and a roof side inner side is an unhardened section.
